# EUROPÄISCHE PATENTSCHRIFT

(11) **EP 2 848 883 B1**
(45) Veröffentlichungstag und Bekanntmachung des Hinweises auf die Patenterteilung: **03.05.2017**
(21) Anmeldenummer: 13184667.7
(22) Anmeldetag: 17.09.2013
(51) Int. Cl.: F26B 25/00, B65G 21/20, F26B 25/04

(54) **Bandtrocknungsanlage mit einem Trockenband**
Belt Dryer with a drying belt
Installation de séchage à bande avec une bande de séchage

(43) Veröffentlichungstag der Anmeldung: 18.03.2015
(73) Patentinhaber: Stela Laxhuber GmbH, 84323 Massing (DE)
(72) Erfinder: Laxhuber, Thomas Christian, 84323 Massing (DE); Latein, Tobias, 84567 Erlbach (DE)
(74) Vertreter: Rothkopf, Ferdinand

(56) Entgegenhaltungen:
- DE-A1- 3 326 882
- DE-B- 1 114 148
- US-A- 2 336 698
- US-A- 4 109 394

## Beschreibung

### Hintergrund der Erfindung

Die Erfindung betrifft eine Bandtrocknungsanlage zum Trocknen von Trockengut, wie Sägespänen, mit einem Transportband, auf dem das Trockengut angeordnet ist, und einer Begrenzungswand, mit der das Trockengut auf dem Transportband zurückgehalten ist, sowie mit einem Schlitz zwischen der Begrenzungswand und dem Transportband, bei der insbesondere der Schlitz zwischen der Begrenzungswand und dem Transportband in seiner Schlitzhöhe einstellbar ist. Ähnliche Bandtrocknungsanlagen sind aus US 4 109 394 A1, welches eine Bandtrocknungsanlage gemäß dem Oberbegriff des ersten Anspruchs offenbart, US 2 336 698 A1 und DE 11 14 148 B bekannt.

In bekannten Bandtrocknungsanlagen für die Trocknung von Trockengut, insbesondere von staubhaltigem Trockengut, wie z. B. Holzsägespänen, ist zum Abdichten des Schlitzes zwischen der Begrenzungswand und dem Transportband ein Dichtelement angeordnet. Das Dichtelement ist in der Regel mit einer Gummilippe gestaltet, die verhindern soll, dass das Trockengut vom Transportband durch den Schlitz abdriftet. Ferner soll mit dem Dichtelement bei staubhaltigen Trockengütern eine Staubemission durch den Schlitz eingeschränkt werden. Zudem wird zum Einschränken der Staubemission herkömmlicherweise in der gesamten Bandtrocknungsanlage im Saugbetrieb gearbeitet, bei dem Warmluft durch das zu trocknende Gut gesaugt wird.

### Zugrundeliegende Aufgabe

Der Erfindung liegt die Aufgabe zugrunde, eine Bandtrocknungsanlage mit im Vergleich zu bekannten Bandtrocknungsanlagen verbesserter Abdichtung zu schaffen, insbesondere um eine Trocknung von staubhaltigen Trockengütern mit besonders niedriger Staubemission zu ermöglichen.

### Erfindungsgemäße Lösung

Diese Aufgabe ist erfindungsgemäß mit einer Bandtrocknungsanlage zum Trocknen von Trockengut, wie Sägespänen, gelöst, mit einem Transportband, auf dem das Trockengut angeordnet ist, und einer Begrenzungswand, mit der das Trockengut auf dem Transportband zurückgehalten ist, sowie mit einem Schlitz zwischen der Begrenzungswand und dem Transportband. Dabei ist der Schlitz zwischen der Begrenzungswand und dem Transportband in seiner Schlitzhöhe einstellbar.

Die erfindungsgemäße Lösung beruht auf der Erkenntnis, dass beim Transportieren des Trockenguts mittels des Transportbands durch den Saugbetrieb auch während der Transportbewegung am Schlitz zwischen der Begrenzungswand und dem Transportband ein Unterdruck entsteht. Dieser Unterdruck bewirkt, dass durch den Schlitz Luft von außen in das Innere des zugehörigen Trockentunnels, wo sich das Trockengut befindet, angesaugt wird. Aufgrund der derart eingesaugten bzw. angesaugten Luft kann das Trockengut und darin vorhandener Staub nicht durch den Schlitz abdriften. Der Staub wird stattdessen durch den Schlitz von der angesaugten Luft nach innen "mitgerissen". Damit ist grundsätzlich allein durch den vorhandenen Schlitz in Verbindung mit der dortigen Lufteinsaugung mittels Unterdruck eine konstruktiv einfache Abdichtung zwischen der Begrenzungswand und dem Transportband als so genannte Bandabdichtung geschaffen.

Die derartige Bandabdichtung reicht aber für die erfindungsgemäß angestrebte niedrige Staubemission noch nicht aus. Erfindungsgemäß ist zur Überwindung dieses Problems und zum Erreichen der angestrebt niedrigen Emissionswerte der Schlitz darüber hinaus in seiner Schlitzhöhe einstellbar. Der Schlitz weist eine Längsausdehnung und eine Breitenausdehnung auf, wobei sich die Längsausdehnung entlang des Transportbands bzw. längs erstreckt und die Breitenausdehnung quer dazu bzw. seitwärts. Die Höhenausdehnung des Schlitzes erstreckt sich vom Transportband aus nach oben. Dabei entspricht die Höhenausdehnung der Schlitzhöhe, die erfindungsgemäß einstellbar bzw. variierbar ist.

Mit dem erfindungsgemäßen Verändern der Schlitzhöhe kann die von angesaugter Luft durchströmte Querschnittsfläche des Schlitzes an die Art und den Zustand des Trockenguts, insbesondere an dessen Staub- und/oder Feuchtegehalt, angepasst werden. Wenn das Trockengut sehr staubig ist, dann kann die Schlitzhöhe kleiner bzw. enger gestaltet sein, womit der Staub verstärkt im Trockengut gehalten wird und nicht nach außen dringt.

Insbesondere kann mittels eines besonders engen Schlitzes Luft mit besonders hoher Geschwindigkeit angesaugt werden. Damit ist das Trockengut und insbesondere vorhandender Staub besonders zuverlässig auf dem Transportband gehalten. Zudem kann ein zu kleiner Schlitz vermieden werden, der andernfalls die Gefahr birgt, dass das Trockengut zwischen der Begrenzungswand und dem Transportband zerrieben wird. Auch einem Verschleiß des Transportbands, insbesondere aufgrund von Reibung im Falle eines zu kleinen Schlitzes wird entgegengewirkt.

Mit der erfindungsgemäßen Variation, Anpassung, Verstellung bzw. Änderung der Schlitzhöhe kann eine Zufuhr jener Luft, die zwischen Begrenzungswand und Transportband seitlich in das Trockengut nachströmt, eingestellt bzw. geregelt werden. Die Regelung der Luftzufuhr ist sowohl in Bezug auf die zugehörige Strömungsgeschwindigkeit als auch auf die Luftmenge der nachströmenden Luft allein durch die Änderung der Schlitzhöhe möglich. Die Luftzufuhr kann damit auch gezielt an eine Haupt-Luftzufuhr des zugehörigen Transporttunnels mit Warmluft angepasst werden. Zudem kann auch auf die Menge an Trockengut auf dem Transportband mittels Einstellen der Schlitzhöhe gezielt reagiert werden.

Die erfindungsgemäße Bandtrocknungsanlage ist damit besonders vorteilhaft zum Trocknen diverser Arten bzw. Typen von Trockengut geeignet. Insbesondere kann staubhaltiges Trockengut besonders staubemissionsarm getrocknet werden. Dabei sind unter Staub Feinpartikel bzw. Feinanteile des Trockenguts selbst oder feine Fremdpartikel zu verstehen, dessen Emission aus der Bandtrocknungsanlage verhindert werden soll.

Ferner ist das Transportband gemäß der Erfindung unter der Begrenzungswand mit einer flächigen Stützauflage abgestützt bzw. stabilisiert. Damit ist das von Natur aus in gewissem Maße quer zur Transportrichtung bewegliche Transportband in seiner Beweglichkeit in dessen seitlichem Bereich eingeschränkt und stabilisiert. Derart stabilisiert ist ein zumindest weitgehend gleich bleibender Abstand des Transportbands zur Begrenzungswand, insbesondere zu dessen Unterkante geschaffen. Mit dem gleich bleibenden Abstand ist der Schlitz gebildet, dessen Schlitzhöhe erfindungsgemäß einstellbar ist. Bevorzugt wird die Schlitzhöhe einfach und gezielt mittels Variation nur eines Bauteils eingestellt, insbesondere mittels Variation der Begrenzungswand. Eine Bewegung des Transportbands senkrecht quer zur Transportrichtung bzw. eine Änderung von dessen Höhenlage während des Transportes würde eine unkontrolliert variierende Schlitzhöhe zur Folge haben, was mit der flächigen Stützauflage erfindungsgemäß vermieden ist. Dazu ist die flächige Stützauflage besonders stabil ferner bevorzugt ortsfest an der Tunnelwand angebracht.

Bei einer vorteilhaften Weiterbildung der Erfindung ist der Schlitz im Querschnitt betrachtet mit einer Düsenform gestaltet. Dabei weist die Düsenform von außen in Richtung zum Trockengut auf dem Transportband eine in Strömungsrichtung der Luft kleiner werdende Strömungsfläche auf. Mit einer solchen kleiner werdenden Strömungsfläche wird die Strömungsgeschwindigkeit der nachströmenden bzw. einströmenden Luft in Strömungsrichtung immer größer und drängt damit den Staub und das Trockengut mit größer werdendem Impuls bzw. größerer Wucht in Richtung des Trockentunnels. Damit ist eine besonders hohe abdichtende Wirkung an dem erfindungsgemäßen Schlitz erreicht.

Die derartige abdichtende Wirkung wird noch verstärkt, indem die Düsenform ferner erfindungsgemäß vorteilhaft mit einer engsten Stelle gestaltet ist, die sich an einer zum Trockengut gewandten Innenseite der Begrenzungswand befindet. Die Innenseite der Begrenzungswand bildet den Übergang von der Begrenzungswand zum Trockengut, sodass die engste Stelle der Düsenform genau an diesem Übergang angeordnet ist. An der engsten Stelle und damit am Übergang der Begrenzungswand zum Trockengut herrscht bei gleicher Luftmenge die höchste Strömungsgeschwindigkeit bzw. Luftgeschwindigkeit der nachströmenden Luft. Die nachströmende Luft strömt damit besonders schnell an diesem Übergang bzw. dieser Grenzfläche in das Trockengut.

Weiterhin ist die Begrenzungswand gemäß der Erfindung vorteilhaft mit einer ersten, ortsfest angebrachten Teilwand und einer zweiten, relativ zu dieser verschiebbaren Teilwand gestaltet. Mit der zweiten, verschiebbaren Teilwand kann der Schlitz bautechnisch besonders einfach in seiner Schlitzhöhe variiert werden. Zudem ist die Bandtrocknungsanlage mit der ersten, ortsfest angebrachten Teilwand kostensparend weitgehend fertig vorzufertigen.

In einer weiteren vorteilhaften Ausgestaltung ist die erfindungsgemäße Begrenzungswand zum Transportband hin auskragend an einer Tunnelwand befestigt. Die Tunnelwand begrenzt den Trockentunnel, in dem das Transportband angeordnet ist und bildet eine weitere Staubschutzwand, zusätzlich zur Begrenzungswand. Die Begrenzungswand ist an der Tunnelwand befestigt und derart auskragend geformt, dass die Begrenzungswand über das Transportband ragt. Derart gestaltet, kann das Transportband ohne Verschleiß- und Reibungsverluste mit einem gewissen Abstand zur Tunnelwand laufen. Der Abstand bildet dabei eine Spalte zwischen der Tunnelwand und dem Transportband, durch die bei Bedarf zusätzlich Staub abgesaugt werden kann. Damit kann der Staub durch die Spalte auch innerhalb des Tunnels insgesamt abgeführt werden.

Zudem ist die Begrenzungswand an der Tunnelwand vorteilhaft mit einer elastischen Dichtung befestigt, mit der eine luft- und staubdichte Verbindung zwischen der Begrenzungswand und der Tunnelwand geschaffen ist, die sich an einem ersten, oberen Ende der Begrenzungswand befindet. An einem diesem ersten, oberen Ende gegenüberliegenden zweiten, unteren Ende ragt die Begrenzungswand auskragend, beabstandet mit dem erfindungsgemäßen Schlitz über das Transportband. Damit ist ein oben abgedichteter Luftraum zwischen der Tunnelwand und der Begrenzungswand geschaffen, was eine gezielte Luftführung sowohl durch den Schlitz als auch durch die Spalte erleichtert.

Erfindungsgemäß ist die auskragende Begrenzungswand ferner vorzugsweise an der Tunnelwand mit einer Stützwand abgestützt. Damit kann die Begrenzungswand einfach und kostengünstig als Blech gestaltet sein, das mit der Stützwand abgestützt bzw. stabilisiert ist. Dabei steht die Stützwand stützend bevorzugt quer zur Tunnelwand, sodass sich die Begrenzungswand schräg zur Tunnelwand an der Stützwand abstützen kann. An der schrägen Begrenzungswand kann dann das Trockengut zum Transportband hin aufgrund seines Eigengewichts abfließen. Andernfalls könnte das Trockengut im Falle eines einfachen Bleches als Begrenzungswand dieses Blech aufgrund seines Eigengewichts eindrücken, was aber mit der erfindungsgemäßen Stützwand vermieden wird. Zudem unterstützt die Stützwand zusätzlich die Luftführung von nachströmender Luft in Richtung des Schlitzes.

Die Stützwand und die Begrenzungswand sind ferner bevorzugt als einzelne, nicht miteinander verbundene Wände, insbesondere Bleche gestaltet. Damit können die beiden Wände besonders einfach arbeits- und materialsparend ohne Verbindungstechnik wie Schweißen, Nieten oder Schrauben in der Bandtrocknungsanlage montiert werden.

Zudem ist in der Tunnelwand erfindungsgemäß vorteilhaft mindestens eine Luftzuführöffnung zum Zuführen von Luft zu dem in seiner Schlitzhöhe einstellbaren Schlitz ausgebildet. Die Luftzuführöffnung verbindet damit einen Außenbereich mit einem Innenbereich des Tunnels der Bandtrocknungsanlage. Im Außenbereich befindliche Außenluft kann durch die Luftzuführöffnung in den Tunnel und mittels des Schlitzes durch die Begrenzungswand zum Trockengut strömen. Mit der Außenluft ist besonders einfach immer genügend Nachschub von Luft gewährleistet, der mittels des erfindungsgemäß einstellbaren Schlitzes wie beschrieben regelbar ist.

Erfindungsgemäß vorteilhaft ist das Transportband neben der flächigen Stützauflage zusätzlich mit mindestens einer Stützrolle abgestützt. Die mindestens eine Stützrolle erstreckt sich dabei bevorzugt waagrecht quer zur Transportrichtung des Transportbandes unter diesem hindurch und dämmt damit zusätzlich die Bewegung des Transportbands senkrecht quer zur Transportrichtung, auch in dessen mittlerem Bereich.

Zudem ist die mindestens eine Stützrolle gemäß der Erfindung vorzugsweise auch an der Stützauflage abgestützt, womit insgesamt bei zugleich kompakter Bauweise eine besonders stabile stützende Wirkung auf das Transportband erreicht ist. Damit kann der erfindungsgemäß einstellbare Schlitz besonders gezielt variiert werden.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen stark vereinfachten schematischen Längsschnitt einer erfindungsgemäßen Bandtrocknungsanlage und
- Fig. 2: den nur teilweise dargestellten und vergrößerten Schnitt II gemäß Fig. 1.

### Detaillierte Beschreibung des Ausführungsbeispiels

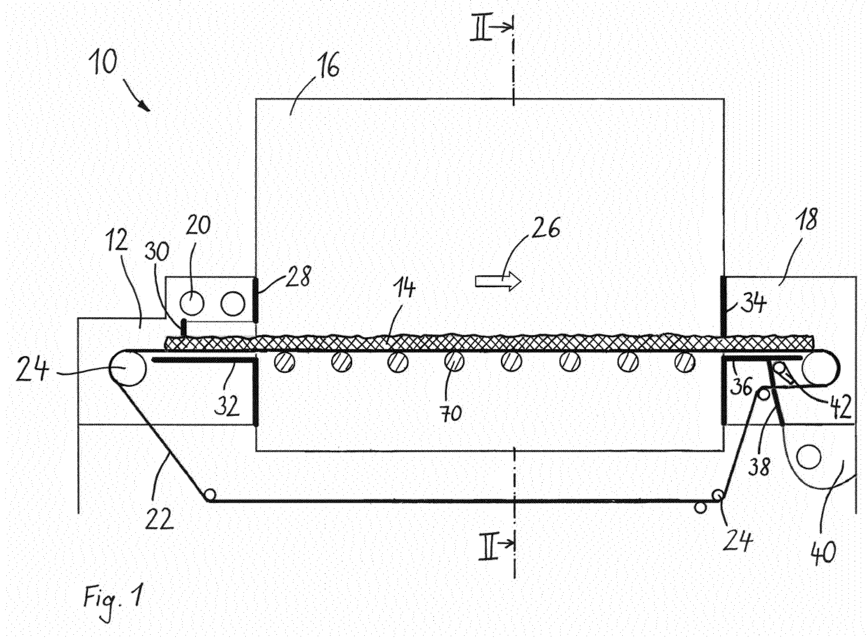

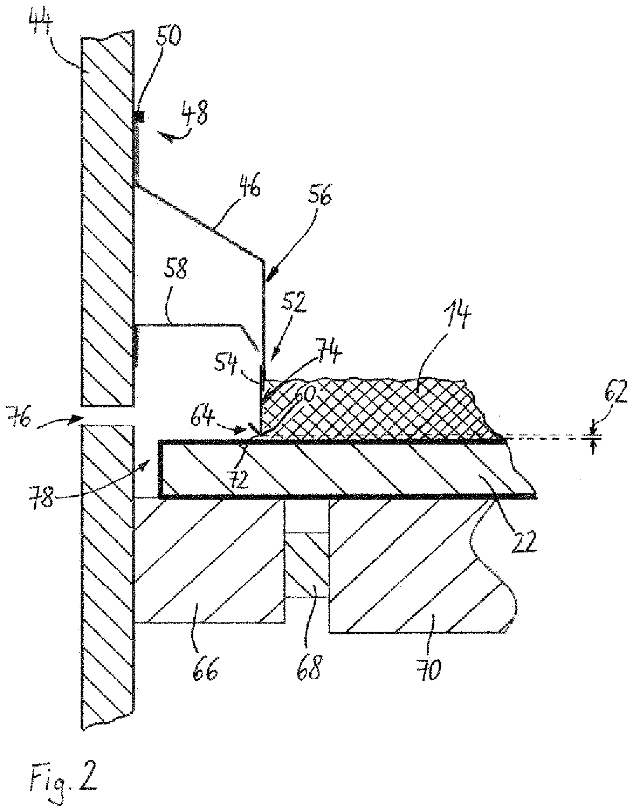

In den Fig. 1 und 2 ist eine Bandtrocknungsanlage 10 veranschaulicht, die eine Gutaufgabe bzw. Aufgabestation 12 für ein zu trocknendes Gut, vorliegend Sägespäne oder ähnliche Produkte umfasst. Dabei wird das zu trocknende Gut sowohl im feuchten als auch im getrockneten Zustand vereinfachend als Trockengut 14 bezeichnet, das an der Aufgabestation 12 noch feucht ist. An die Aufgabestation 12 schließt ein luftführendes Gehäuse bzw. Tunnel 16 zum Trocknen des Trockenguts 14 an, aus dem das getrocknete Trockengut 14 über eine Gutabgabe bzw. Abgabestation 18 wieder aus der Bandtrocknungsanlage 10 abgeführt ist.

Die Aufgabestation 12 ist mit zwei Verteilschnecken 20 gebildet, welche das zugeführte feuchte Trockengut 14 auf ein umlaufendes Trocknungsband bzw. Transportband 22 aufgeben und dort verteilen. Das Transportband 22 ist mittels Rollen 24 geführt und mittels eines (nicht dargestellten) Antriebs in Transportrichtung 26 von der Aufgabestation 12 zur Abgabestation 18 bewegt. Damit ist das auf dem Transportband 22 befindliche Trockengut 14 ebenfalls in Transportrichtung 26 bewegt. Während des Transports wird das Trockengut 14 mittels Zufuhr und Abfuhr von Luft, vorliegend Warmluft, über nicht dargestellte, bekannte Ansauggitter, Kanäle, Ventile und Wärmeübertrager getrocknet.

Das Trocknen erfolgt dabei vorliegend im Saugbetrieb, wozu Luft über mindestens ein (nicht weiter dargestelltes) Ansauggitter in den Tunnel 16 und durch das zu trocknende Trockengut 14 gesaugt wird, das sich auf dem Transportband 22 befindet. Das Transportband 22 ist dazu luftdurchlässig aus einem Gewebe gebildet, das mit einer Porengröße von weniger als etwa 540 Mikrometer zumindest weitgehend staubundurchlässig ist. Derart gestaltet und betrieben, fungiert das Trockengut 14 zum einen selbst als erster Filter für im Tunnel 16 vorhandenen Staub und das Transportband 22 mit seiner geringen Porengröße als zweiter Filter, der den Staub im Trockengut 14 belässt. Damit ist eine Emission von vorhandenem Staub aus der Bandtrocknungsanlage 10 eingeschränkt. Zum weiteren Abschotten des Staubes nach außen sind an der Aufgabestation 12 drei Bleche als Trennelemente 28, 30 und 32 und an der Abgabestation 18 drei Bleche als Trennelemente 34, 36 und 38 vorgesehen. Dabei fungieren insbesondere die Trennelemente 30 und 38 auch als Produktrutschen.

In der Abgabestation 18 gelangt das getrocknete Trockengut 14 als Produkt entlang des Trennelements 38 als Produktrutsche von dem Transportband 22 in einen Austrag 40 und kann von dort aus der Bandtrocknungsanlage 10 entnommen werden.

Zum Reinigen des Transportbands 22 von auf dessen Gewebe zurückgebliebenen Feinpartikeln bzw. Kleinkörpern ist eine zwischen den Trennelementen 36 und 38 angeordnete Gebläsevorrichtung 42 vorgesehen. Mittels der Gebläsevorrichtung 42, vorliegend einem Hochdruckgebläse, wird das Transportband 22 abgeblasen und dabei freigesetzte Feinpartikel werden zusammen mit dem Trockengut 14 in den Austrag 40 befördert. Damit wird verhindert, dass die Feinpartikel von einem für den Saugbetrieb verantwortlichen Ventilator in einen nicht dargestellten Abluftschacht gesaugt werden.

Die erfindungsgemäße Lösung mit der Abdichtung bzw. Abschottung von Trockengut 14 und Staub am Transportband 22 ist detailliert in Fig. 2 dargestellt. Dabei ist der Tunnel 16 entlang seiner Längserstreckung seitlich mit zwei Tunnelwänden 44 begrenzt, von denen nur eine dargestellt ist. An der einzelnen Tunnelwand 44 ist ein zweimal gekantetes bzw. geknicktes Blech als eine erste Teilwand 46 mit ihrem oberen Ende 48 ortsfest angebracht, vorliegend angeschraubt, und dort mit einer elastischen Dichtung 50 aus Silikon luft- und staubundurchlässig abgedichtet. Ferner ist die erste, ortsfest angebrachte Teilwand 46 an ihrem unteren Ende 52 mit einem weiteren Blech als eine zweite Teilwand 54 gekoppelt, die an der ersten Teilwand 46 verschiebbar angeordnet ist, vorliegend mittels Schrauben verstellbar ist. Die erste Teilwand 46 und die zweite Teilwand 54 bilden zusammen eine Begrenzungswand 56, die aufgrund der geknickten Form der ersten Teilwand 46 auskragend an der Tunnelwand 44 befestigt ist. Zusätzlich ist an der Tunnelwand 44 ein weiteres Blech als Stützwand 58 angeschraubt, das quer zwischen Tunnelwand 44 und Begrenzungswand 56 verläuft und damit die Begrenzungswand 56 gegen eine Bewegung in Richtung Tunnelwand 44 abstützt.

Die auskragende Begrenzungswand 56 ragt seitlich über das Transportband 22 und ist mit ihrer Unterkante 60 von dem Transportband 22 mit einem Abstand angeordnet, der eine Schlitzhöhe 62 eines damit gebildeten Schlitzes 64 definiert. Der Schlitz 64 ist, bezogen auf die Fig. 2, nach unten mit dem Transportband 22 festgelegt, das dazu seitlich unterhalb der Begrenzungswand 56 an einer entlang der Tunnelwand 44 verlaufenden und quer dazu angebrachten flächigen Stützauflage 66 abgestützt ist. An die flächige Stützauflage 66 sind über jeweils ein Verbindungselement 68 mehrere Stützrollen 70 gekoppelt, die das Transportband 22 zusätzlich abstützen. Mit den Stützrollen 70, den Verbindungselementen 68 und der flächigen Stützauflage 66 ist das Transportband 22 stabil geführt, da dessen Bewegungen quer zur Transportrichtung 26 während des Transports zumindest weitgehend vermieden werden.

Nach oben ist der Schlitz 64 hingegen in seiner Schlitzhöhe 62 erfindungsgemäß variabel bzw. einstellbar gestaltet. Dazu kann die zweite Teilwand 54 an der ersten Teilwand 46 verschoben und in unterschiedlichen Abständen zum Transportband 22 befestigt werden. Die zweite Teilwand 46 ist als Blech ferner derart abgekantet, dass der Schlitz 64 eine Düsenform mit einer engsten Stelle 72 hat, die an einer zum Trockengut 14 gewandten Innenseite 74 der Begrenzungswand 56 positioniert ist. Derart geformt, wird durch den Schlitz 64 in Richtung Trockengut 14 strömende Luft an der engsten Stelle 72 gebündelt und strömt so mit besonders hoher Strömungsgeschwindigkeit bei gleicher Luftmenge durch den Schlitz 64. Eine solche Luftströmung wird mittels eines Unterdrucks bzw. Soges erzeugt, der mittels des im Tunnel 16 vorherrschenden Unterdrucks aufgrund des Saugbetriebs hervorgerufen wird. Mit der derartig erzeugten Luftströmung durch den Schlitz 64 wird eine Staubemission von im Trockengut 14 vorhandenem Staub während des Betriebes sicher besonders einfach und effektiv verhindert. Damit ist ohne zusätzliche Bauteile kostensparend eine Staubabdichtung geschaffen, die zudem problemlos funktioniert.

Ferner ist in der Tunnelwand 44 mindestens eine Luftzuführöffnung 76 vorgesehen, durch die Luft von außen in den Tunnel 16 zuführbar ist, vorliegend mittels des Unterdrucks im Tunnel 16 einfach in den Tunnel 16 einströmt bzw. nachströmt. Damit ist gewährleistet, dass immer genügend Luft von außen bzw. Außenluft durch den Schlitz 64 in Richtung Trockengut 14 nachströmen kann. Mit dem Nachströmen von Außenluft kann die Luftmenge und bei Bedarf auch der Feuchtegehalt in der durch den Schlitz 64 nachströmenden Luft geregelt werden. Erfindungsgemäß kann eine solche Regelung mit dem Einstellen der Schlitzhöhe 62 und gegebenenfalls mittels nicht dargestellter Klappen in der einzelnen Luftzuführöffnung 76 durchgeführt werden.

Das Transportband 22 ist seitlich von der Tunnelwand 44 mit einer Spalte 78 beabstandet angeordnet und kann dadurch verschleißarm ohne Reibungsverluste betrieben werden. Zudem kann durch die Spalte 78 je nach Bedarf zusätzlich Staub abgesaugt werden.

### Bezugszeichenliste

- 10: Bandtrocknungsanlage
- 12: Aufgabestation
- 14: Trockengut
- 16: Tunnel bzw. Gehäuse
- 18: Abgabestation
- 20: Verteilschnecke an der Aufgabestation
- 22: Transportband
- 24: Rolle des Transportbands
- 26: Transportrichtung
- 28: Trennelement
- 30: Trennelement
- 32: Trennelement
- 34: Trennelement
- 36: Trennelement
- 38: Trennelement
- 40: Austrag
- 42: Gebläsevorrichtung
- 44: Tunnelwand
- 46: erste ortsfest angebrachte Teilwand
- 48: oberes Ende
- 50: elastische Dichtung
- 52: unteres Ende
- 54: zweite verschiebbare Teilwand
- 56: Begrenzungswand
- 58: Stützwand
- 60: Unterkante der Begrenzungswand
- 62: Schlitzhöhe
- 64: Schlitz
- 66: flächige Stützauflage
- 68: Verbindungselement zwischen Stützauflage und Stützrolle
- 70: Stützrolle
- 72: engste Stelle
- 74: Innenseite der Begrenzungswand
- 76: Luftzuführöffnung
- 78: Spalte

## Patentansprüche

1. Bandtrocknungsanlage (10) zum Trocknen von Trockengut (14), wie Sägespänen, mit einem Transportband (22), auf dem das Trockengut (14) angeordnet ist, und einer Begrenzungswand (56), mit der das Trockengut (14) auf dem Transportband (22) zurückgehalten ist, sowie mit einem Schlitz (64) zwischen der Begrenzungswand (56) und dem Transportband (22), bei der der Schlitz (64) zwischen der Begrenzungswand (56) und dem Transportband (22) in seiner Schlitzhöhe (62) einstellbar ist,
**dadurch gekennzeichnet, dass** das Transportband (22) unter der Begrenzungswand (56) mit einer flächigen Stützauflage (66) abgestützt ist.

2. Bandtrocknungsanlage nach Anspruch 1,
bei der der Schlitz (64) im Querschnitt betrachtet mit einer Düsenform gestaltet ist.

3. Bandtrocknungsanlage nach Anspruch 2,
bei der die Düsenform mit einer engsten Stelle (72) gestaltet ist, die sich an einer zum Trockengut (14) gewandten Innenseite (74) der Begrenzungswand (56) befindet.

4. Bandtrocknungsanlage nach einem der Ansprüche 1 bis 3,
bei der die Begrenzungswand (56) mit einer ersten ortsfest angebrachten Teilwand (46) und einer zweiten, relativ zu dieser verschiebbaren Teilwand (54) gestaltet ist.

5. Bandtrocknungsanlage nach einem der Ansprüche 1 bis 4,
bei der die Begrenzungswand (56) zum Transportband (22) hin auskragend an einer Tunnelwand (44) befestigt ist.

6. Bandtrocknungsanlage nach Anspruch 5,
bei der die auskragende Begrenzungswand (56) an der Tunnelwand (44) mit einer Stützwand (58) abgestützt ist.

7. Bandtrocknungsanlage nach Anspruch 5 oder 6,
bei der in der Tunnelwand (44) mindestens eine Luftzuführöffnung (76) zum Zuführen von Luft zu dem in seiner Schlitzhöhe (62) einstellbaren Schlitz (64) ausgebildet ist.

8. Bandtrocknungsanlage nach einem der Ansprüche 1 bis 7,
bei der das Transportband (22) neben der flächigen Stützauflage (66) mit mindestens einer Stützrolle (70) abgestützt ist.

9. Bandtrocknungsanlage nach Anspruch 8,
bei der die mindestens eine Stützrolle (70) an der flächigen Stützauflage (66) abgestützt ist.

## Claims

1. Belt drying installation (10) for drying material to be dried (14), such as sawdust, having a conveyor belt (22) on which the material to be dried (14) is arranged, and a boundary wall (56) by which the material to be dried (14) is retained on the conveyor belt (22), and also having a slot (64) between the boundary wall (56) and the conveyor belt (22), wherein the slot (64) is adjustable in its slot height (62) between the boundary wall (56) and the conveyor belt (22),
**characterised in that** the conveyor belt (22) is supported under the boundary wall (56) by a planar supporting rest (66).

2. Belt drying installation according to Claim 1,
wherein the slot (64), viewed in cross section, is designed with a nozzle shape.

3. Belt drying installation according to Claim 2,
wherein the nozzle shape is designed with a narrowest point (72) situated at an inner side (74), facing the material to be dried (14), of the boundary wall (56).

4. Belt drying installation according to one of Claims 1 to 3,
wherein the boundary wall (56) is designed with a first stationarily mounted part-wall (46) and a second part-wall (54) displaceable relative thereto.

5. Belt drying installation according to one of Claims 1 to 4,
wherein the boundary wall (56) is fastened to a tunnel wall (44) in a manner projecting towards the conveyor belt (22).

6. Belt drying installation according to Claim 5,
wherein the projecting boundary wall (56) is supported on the tunnel wall (44) by a supporting wall (58).

7. Belt drying installation according to Claim 5 or 6,
wherein at least one air supply opening (76) for supplying air to the slot (64) adjustable in its slot height (62) is formed in the tunnel wall (44).

8. Belt drying installation according to one of Claims 1 to 7,
wherein the conveyor belt (22) is supported, besides the planar supporting rest (66), by at least one supporting roller (70).

9. Belt drying installation according to Claim 8,
wherein the at least one supporting roller (70) is supported on the planar supporting rest (66).

## Revendications

1. Installation de séchage à bande (10) pour sécher un produit sec (14), par exemple des copeaux, avec une bande de transport (22) sur laquelle le produit sec (14) est disposé et une paroi de délimitation (56) à l'aide de laquelle le produit sec (14) est retenu sur la bande de transport (22), ainsi qu'avec une fente (64) placée entre la paroi de délimitation (56) et la bande de transport (22), la fente (64) pouvant être réglée dans sa hauteur de fente (62), entre la paroi de délimitation (56) et la bande de transport (22), **caractérisée en ce que** la bande de transport (22) est soutenue sous la paroi de délimitation (56) à l'aide d'un revêtement portant (66) plat.

2. Installation de séchage à bande selon la revendication 1, dans laquelle la fente (64), vue dans la section transversale, est réalisée avec une forme de buse.

3. Installation de séchage à bande selon la revendication 2, dans laquelle la forme de buse est réalisée avec un point (72) très étroit se trouvant au niveau d'un côté intérieur (74), orienté vers le produit sec (14), de la paroi de délimitation (56).

4. Installation de séchage à bande selon l'une quelconque des revendications 1 à 3, dans laquelle la paroi de délimitation (56) est agencée avec une première paroi partielle (46) disposée fixement sur place et avec une deuxième paroi partielle (54) pouvant être coulissée par rapport à elle.

5. Installation de séchage à bande selon l'une quelconque des revendications 1 à 4, dans laquelle la paroi de délimitation (56) est fixée par rapport à la bande de transport (22) saillant au niveau d'une paroi de tunnel (44).

6. Installation de séchage à bande selon la revendication 5, dans laquelle la paroi de délimitation (56) saillant au niveau de la paroi de tunnel (44) est soutenue à l'aide d'une paroi portante (58).

7. Installation de séchage à bande selon la revendication 5 ou 6, dans laquelle au moins une ouverture d'amenée d'air (76) est réalisée dans la paroi de tunnel (44) pour amener de l'air à la fente (64) réglable en hauteur de fente (62).

8. Installation de séchage à bande selon l'une quelconque des revendications 1 à 7, dans laquelle la bande de transport (22) est soutenue, outre par le revêtement portant (66) plat, à l'aide d'au moins un rouleau portant (70).

9. Installation de séchage à bande selon la revendication 8, dans laquelle l'au moins un rouleau portant (70) est soutenu au niveau du revêtement portant (66) plat.
